# EUROPEAN PATENT APPLICATION

(11) **EP 4 822 649 A1**
(43) Date of publication of application: **14.10.2026**
(21) Application number: 26171651.8
(22) Date of filing: 10.04.2026
(51) Int. Cl.: G06T 15/20

(54) **METHOD AND APPARATUS OF IMAGE DISPLAYING, ELECTRONIC DEVICE, AND READABLE STORAGE MEDIUM**

(30) Priority: 11.04.2025 CN 202510459281
(71) Applicant: Beijing Zitiao Network Technology Co., Ltd., Beijing 100190 (CN)
(72) Inventor: WANG, Xiaosong, Beijing, 100028 (CN)
(74) Representative: Isarpatent

(57) **Abstract**

The present disclosure provides a method and apparatus of image displaying, an electronic device, and a readable storage medium. The method includes: displaying (101) first picture content of a video image frame in a first display window associated with an extended reality device; determining(102) second picture content of the video image frame corresponding to a changed pose in response to a change in a pose of the extended reality device; and displaying (103) the second picture content in the first display window, where the first picture content and the second picture content are not completely the same.

## Description

### TECHNICAL FIELD

The present disclosure relates to o a method and apparatus of image displaying, an electronic device, and a readable storage medium.

### BACKGROUND

3D video provides two slightly different views for human eyes to simulate binocular disparity when human eyes see scenes in the real world, and the disparity is a key factor for users to perceive depth and stereo space. When there is a slight difference between images seen by the left eye and the right eye, the brain synthesizes the information to generate a sense of depth and volume of an object.

The display of picture content of a 3D video is generally fixed and does not change with the change of the relative position between a person and a screen, so that a sense of space cannot be reflected.

### SUMMARY

An embodiment of the present disclosure provides a method of image displaying, which is used for an extended reality device and includes:
displaying first picture content of a video image frame in a first display window associated with the extended reality device;
determining second picture content of the video image frame corresponding to a changed pose in response to a change in a pose of the extended reality device; and
displaying the second picture content in the first display window, where the first picture content and the second picture content are not completely the same.

An embodiment of the present disclosure provides an apparatus of image displaying, which is used for an extended reality device and includes:
a first displaying unit, configured to display first picture content of a video image frame in a first display window associated with the extended reality device;
a determining unit, configured to determine second picture content of the video image frame corresponding to a changed pose in response to a change in a pose of the extended display device; and
a second displaying unit, configured to display the second picture content in the first display window, where the first picture content and the second picture content are not completely the same.

An embodiment of the present disclosure provides an electronic device, which includes: a processor and a memory;
where the memory stores a computer-executable instruction; and
the processor executes the computer-executable instruction stored in the memory, so that the at least one processor executes the method of image displaying according to the above embodiment and various possible designs of the embodiment.

An embodiment of the present disclosure provides a computer-readable storage medium, where a computer-executable instruction is stored in the computer-readable storage medium, and when the computer-executable instruction is executed by a processor, the method of image displaying according to the above embodiment and various possible designs of the embodiment is implemented.

An embodiment of the present disclosure provides a computer program product, which includes a computer program, and when the computer program is executed by a processor, the method of image displaying according to the above embodiment and various possible designs of the embodiment is implemented.

### BRIEF DESCRIPTION OF DRAWINGS

In order to more clearly explain the technical solutions in the embodiments of the present disclosure or in the prior art, the following will briefly introduce the drawings that need to be used in the description of the embodiments or the prior art. Obviously, the drawings in the following description are some embodiments of the present disclosure. For those of ordinary skill in the art, other drawings may be obtained based on these drawings without creative efforts.
Fig. 1 is a first schematic flowchart of a method of image displaying provided by an embodiment of the present disclosure;
Fig. 2 is a second schematic flowchart of a method of image displaying provided by an embodiment of the present disclosure;
Fig. 3 is a schematic flowchart of step S202 in Fig. 2;
Fig. 4 is a schematic diagram of a scenario where a user watches an image through an extended reality device;
Fig. 5 is a schematic diagram of determining a texture according to a pose in the scenario shown in Fig. 4;
Fig. 6 is a schematic diagram of determining a pixel value of a pixel point in a transition region provided by the present disclosure;
Fig. 7 is a structural block diagram of an apparatus of image displaying provided by an embodiment of the present disclosure; and
Fig. 8 is a schematic hardware structural diagram of an electronic device provided by an embodiment of the present disclosure.

### DETAILED DESCRIPTION

In order to make the purpose, technical solutions and advantages of embodiments of the present disclosure clearer, the technical solutions in the embodiments of the present disclosure will be clearly and completely described below in conjunction with the drawings in the embodiments of the present disclosure. Obviously, the described embodiments are part of the embodiments of the present disclosure, but not all of the embodiments. Based on the embodiments in the present disclosure, all other embodiments obtained by persons of ordinary skill in the art without creative efforts fall within the protection scope of the present disclosure.

The generation of 3D video is to capture and create images through two synchronously operating cameras (or a single camera with dual lenses) to simulate human eyes. These two cameras correspond to the left-eye view and the right-eye view, respectively, and there is a slight horizontal deviation when capturing images to simulate binocular disparity.

Images of 3D video may be displayed in an extended reality device. In the related art, for each video image frame, the content of the frame is fixed when displayed, and the content of the frame cannot change correspondingly with the change of the relative position between a person and a screen, so that the effect of the sense of space is poor.

According to the solution provided by the present disclosure, different picture content of the same video image may be displayed to a user in different poses of an extended reality device, thereby highlighting the sense of space of the picture content of 3D video.

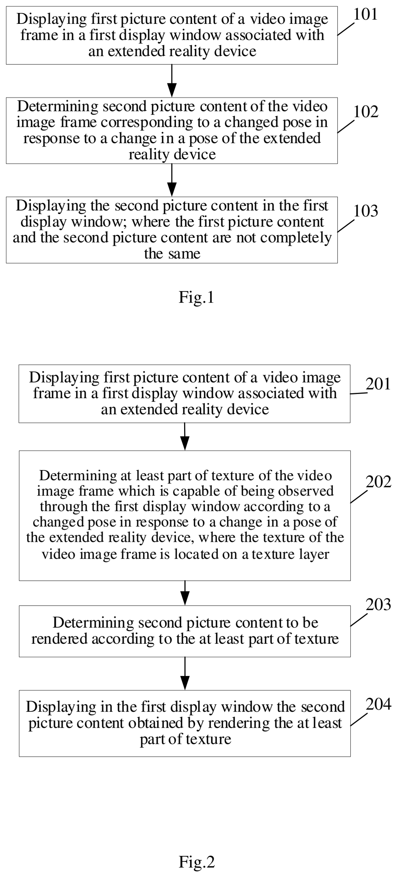

Please refer to Fig. 1. Fig. 1 is a first schematic flowchart of a method of image displaying provided by the present disclosure. As shown in Fig. 1, the method includes the following steps.

S101: displaying first picture content of a video image frame in a first display window associated with an extended reality device.

In this embodiment, the execution body of the method of image displaying may be the extended reality device, and may also be a server that provides services for the extended reality device.

The extended reality device here may be various types of extended reality devices. Illustratively, the extended reality device is a wearable extended reality device, such as a head-mounted extended reality device.

The extended reality device may be integrated with a display apparatus, or may be externally connected to a display apparatus. The first display window may be a partial display window on a display screen of the display apparatus.

In an example, the first display window may be a display window for displaying 3D video images. The 3D video may be composed of multiple frames of video images. The multiple frames of video images may be displayed in the first display window.

The video image frame displayed in the first display window here may be any frame of video image in the 3D video.

The first picture content may be picture content presented in the first display window when the extended reality device is in pose 1.

The extended reality device may actively or passively change its pose. For example, the extended reality device actively changes its pose according to a pose change instruction of a driving apparatus. For another example, the extended reality device passively changes its pose with the movement of a wearing user.

S102: determining second picture content of the video image frame corresponding to a changed pose in response to a change in a pose of the extended reality device.

A parameter of at least one sensor for determining the pose in the extended reality device may be acquired, and whether the extended reality device has a pose change may be determined according to the parameter of the sensor. Illustratively, the sensor may include but not limited to one or more of: an inertial measurement unit, an optical tracking system, and a depth sensor.

The sensor may collect signals at a relatively high sampling frequency. In an example, the sensor may determine whether the extended reality device has a pose change according to a currently collected signal and a historically collected signal, and output pose change information.

In an example, the sensor may send a currently collected signal to the extended reality device, and the extended reality device determines whether the extended reality device has a pose change according to a currently received signal of the sensor and a historically received signal of the sensor.

After detecting that the pose of the extended reality device has changed, for example, the pose of the extended reality device has changed from pose 1 to pose 2. The first picture content of the video image frame A is displayed in pose 1, and if the picture of another video image frame is not switched to in the first display window in pose 2, the second picture content of the video image frame A corresponding to pose 2 may be determined.

S103: displaying the second picture content in the first display window, where the first picture content and the second picture content are not completely the same.

The first picture content displayed in the first display window is switched to the second picture content. The first picture content and the second picture content are not completely the same.

That is, for the same video image frame, the displayed picture content of the video image frame will change with different poses of the extended reality device.

The extended reality device is a wearable device, and the wearable device may change its pose with the movement of a user. When the extended reality device changes its pose with the movement of the user, with the solution of this embodiment, the picture content of the video image frame displayed in the first display window associated with the extended reality device also changes accordingly, so that the sense of space may be better displayed to the user.

In this embodiment, the first picture content of the video image frame is displayed in the first display window associated with the extended reality device; the second picture content of the video image frame corresponding to the changed pose is determined in response to the change in the pose of the extended reality device; and the second picture content is displayed in the first display window, where the first picture content and the second picture content are not completely the same. In this way, the picture content of the displayed video image frame is updated with the change of the pose of the extended reality device, which is beneficial to enhancing the immersion and the sense of space, and the spatial interactivity may also be improved.

Please refer to Fig. 2. Fig. 2 is a second schematic flowchart of a method of image displaying provided by the present disclosure. As shown in Fig. 2, the method includes the following steps.

S201: displaying first picture content of a video image frame in a first display window associated with an extended reality device.

For the specific implementation of step S201, reference may be made to the description of step S101 of the embodiment shown in Fig. 1, which will not be repeated here.

S202: determining at least part of texture of the video image frame which is capable of being observed through the first display window according to a changed pose in response to a change in a pose of the extended reality device, where the texture of the video image frame is located on a texture layer.

In this embodiment, the first display window and the texture layer are disposed on different planes. A fixed relative positional relationship between the first display window and the texture layer may be set in a three-dimensional space. For example, a preset distance is set between the plane where the first display window is located and the plane where the texture layer is located, and the preset distance may be an arbitrary value. Specifically, the preset distance may be set according to a specific application scenario, which is not limited here.

In an example, in the three-dimensional space, the distance between the first display window and the projection of the extended reality device in the three-dimensional space is smaller than the distance between the texture layer and the projection of the extended reality device in the three-dimensional space.

The texture of the video image frame may include a detail pattern or material attribute attached to the surface of a 3D model or a 2D image, and is one of the materials of the picture content displayed by the display window. Generally, the texture may be stored or loaded in the form of a 2D image. Generally, the texture of the video image frame is loaded onto the texture layer before the picture content is rendered.

The first display window may display picture content obtained after rendering at least part of texture of the texture layer by a rendering pipeline. That is, the rendering pipeline renders at least part of texture of the texture layer in the first display window to obtain the picture content displayed in the first display window.

After detecting the change in the pose of the extended reality device, the execution body may determine at least part of corresponding texture on the texture layer after the pose of the extended reality device has changed.

S203: determining second picture content to be rendered according to the at least part of texture.

In an example, the at least part of texture may be used as the second picture content to be rendered.

In an example, the at least part of texture, and corresponding illumination, geometric information of a 3D model and a shadow may be used as the second picture content to be rendered.

S204: displaying in the first display window the second picture content obtained by rendering the at least part of texture.

The rendering pipeline for rendering the picture may render at least part of re-determined texture after the pose change in the first display window to obtain the second picture content.

In this embodiment, the texture layer and the picture content display window are disposed on different planes, so that the purpose that different areas of the texture layer may be observed through the display window from different positions of human eyes may be achieved, and then different areas to be rendered of the video image frame may be determined according to different poses of the extended reality device, and a specific solution for displaying different picture content with the change of the pose of the extended reality device is provided, which is beneficial to improving the sense of space and immersion of the displayed content of the extended reality device.

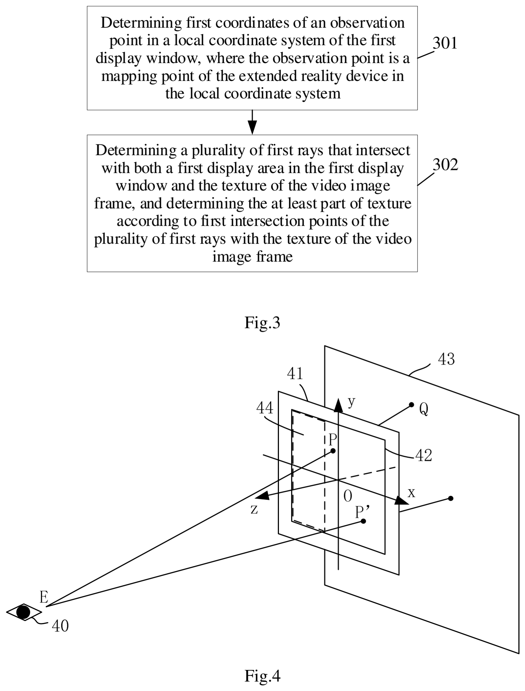

Please refer to Fig. 3. Fig. 3 is a schematic flowchart of step S202 in Fig. 2. As shown in Fig. 3, it includes the following steps.

S301: determining first coordinates of an observation point in a local coordinate system of the first display window, where the observation point is a mapping point of the extended reality device in the local coordinate system.

The coordinates of the first display window and the texture layer in a world coordinate system are unchanged. The extended reality device and the first display window respectively have their own local coordinate systems. Illustratively, the local coordinate system of the first display window may be: taking a preset point in the first display window as an origin o, taking two straight lines passing through the origin and parallel to two intersecting sides in the first display window as an x-axis and a y-axis, respectively, and taking a straight line passing through the origin and perpendicular to an xoy plane as a z-axis.

The coordinates of the first display window and the texture layer in the world coordinate system may be regarded as fixed. The coordinates and posture of the extended reality device will change in the world coordinate system.

After the pose of the extended reality device has changed, the coordinates of the extended reality device in the world coordinate system are determined. The extended reality device may be mapped to the observation point in an extended reality scene, and the coordinates of the observation point in the world coordinate system are transformed to the local coordinate system of the first display window through a preset coordinate transformation matrix according to the coordinates of the extended reality device in the world coordinate system and the coordinates of the first display window in the world coordinate system to obtain the first coordinates.

Similarly, the coordinates of each pixel of the texture on the texture layer may be transformed to the local coordinate system of the first display window according to the positional relationship between the first display window and the texture layer in the world coordinate system.

S302: determining a plurality of first rays that intersect with both a first display area in the first display window and the texture of the video image frame, and determining the at least part of texture according to first intersection points of the plurality of first rays with the texture of the video image frame.

The first display area may be an area in the first display window for displaying the picture content of the video image frame. In some examples, the display interface where the first display window is located further includes other display areas other than the first display window. The other display areas may be used for displaying other picture content, such as the picture content of an image collected by an image collecting apparatus of the extended reality device.

In some implementations, a plurality of fifth rays intersecting with the texture may be emitted from the first coordinates of the extended reality device. If a fifth ray intersects with the first display area, the fifth ray is the first ray.

Specifically, the texture coordinates of each pixel of the video image frame on the texture layer may be regarded as known. In an example, for each pixel of the texture of the video image frame, a fifth ray from the first coordinates to the texture coordinates of the pixel is constructed. Illustratively, the intersection point of each fifth ray with the xoy plane may be determined according to an algorithm for solving the intersection point of a ray with a plane.

If the coordinates of the intersection point of the fifth ray with the xoy plane in the local coordinate system of the first display window are within the first display area, the fifth ray is the first ray.

For each first ray, the coordinates on the texture of the video image frame corresponding to the first ray are the intersection point of the first ray with the texture. The pixel corresponding to the intersection point is the pixel to be rendered. The at least part of texture to be rendered is composed of the intersection points of the plurality of first rays with the texture.

In these implementations, by constructing the fifth ray from the first coordinates of the extended reality device to the coordinates of each pixel of the texture, taking the fifth ray intersecting with the first display area as the first ray, and taking the pixel corresponding to the coordinates of the texture on the first ray as the pixel to be rendered, the at least part of texture to be rendered may be quickly determined after the pose of the extended reality device has changed.

In this embodiment, the first coordinates of the extended reality device are determined in the local coordinate system of the first display window, and then the plurality of first rays starting from the first coordinates and intersecting with both the first display area and the texture of the video image frame are determined, and the at least part of texture to be rendered after the pose of the extended reality device has changed is determined by the intersection points of the plurality of first rays with the texture. In different poses of the extended reality device, the rays emitted from the extended reality device and intersecting with both the first display area and the texture are not completely the same, so the at least part of texture to be rendered which is determined is not completely the same. Thus, the effect of determining different at least part of texture with the change of the pose of the extended reality device is realized.

In some implementations, step S302 includes the following sub-steps.

First, second intersection points of a plurality of second rays emitted from the first coordinates with the first display area are determined.

A plurality of rays may be constructed by taking the first coordinates of the extended reality device as an endpoint, and the ray intersecting with the first display area in the plurality of rays is the second ray. The intersection point of the second ray with the first display area is taken as the second intersection point.

Then, for each second ray, the coordinates of the intersection point of the second ray with the texture layer are calculated according to the second intersection point corresponding to the second ray.

Afterwards, in response to determining that the calculated coordinates of the intersection point is within the range of the texture of the video image frame, the second ray is taken as the first ray, and the intersection point is taken as the first intersection point.

Finally, the at least part of texture is composed of first intersection points corresponding to the plurality of first rays, respectively.

In an example, an algorithm for calculating the intersection point between a ray and a plane may be used to determine whether the plurality of rays intersect with the xoy plane. If a ray intersects with the xoy plane and the intersection point is within the first display area, the ray is the second ray. The algorithm for the intersection point between a ray and a plane may continue to be used to determine the intersection point of the second ray with the texture layer. If the intersection point of the second ray with the texture layer is within the texture of the video image frame, the second ray is the first ray, and the intersection point is the first intersection point, and then the coordinates of each first intersection point are obtained.

The at least part of texture to be rendered may be composed of first intersection points corresponding to the plurality of second rays, respectively.

In some examples, the calculating, for each second ray, the coordinates of the intersection point of the second ray with the texture layer according to the coordinates of the second intersection point corresponding to the second ray includes:

calculating the coordinates of the intersection point of the second ray with the texture layer according to a relative positional relationship between the texture layer and the first display window, a distance between the extended reality device and the first display window, and the coordinates of the second intersection point.

The relative positional relationship here may be, for example, that a constant preset distance is maintained between the texture layer and the first display window. After the posture has changed, the pose of the extended reality device is briefly considered not to change, and the distance between the extended reality device and the first display window may be detected. The distance between the extended reality device and the first display window may be determined by the intersection point of a ray emitted from the first coordinates of the extended reality device and perpendicular to the plane where the first display window is located with the plane where the first display window is located. In addition, the ray will also be perpendicular to the texture layer after passing through the plane where the first display window is located.

For each second intersection point, the coordinates of the intersection point of the second ray where the second intersection point is located after passing through the first display window with the texture layer may be calculated according to the triangle similarity principle.

For the intersection point of the texture layer corresponding to each second intersection point, it may be detected whether the coordinates of the intersection point are within the range of the texture of the video image frame. If so, the pixel corresponding to the intersection point is the pixel to be rendered, and the second intersection point is regarded as the first intersection point. Otherwise, the pixel is not the pixel to be rendered. In this way, the at least part of texture to be rendered may be composed of pixels corresponding to the intersection points of the texture layer corresponding to the plurality of first intersection points, respectively.

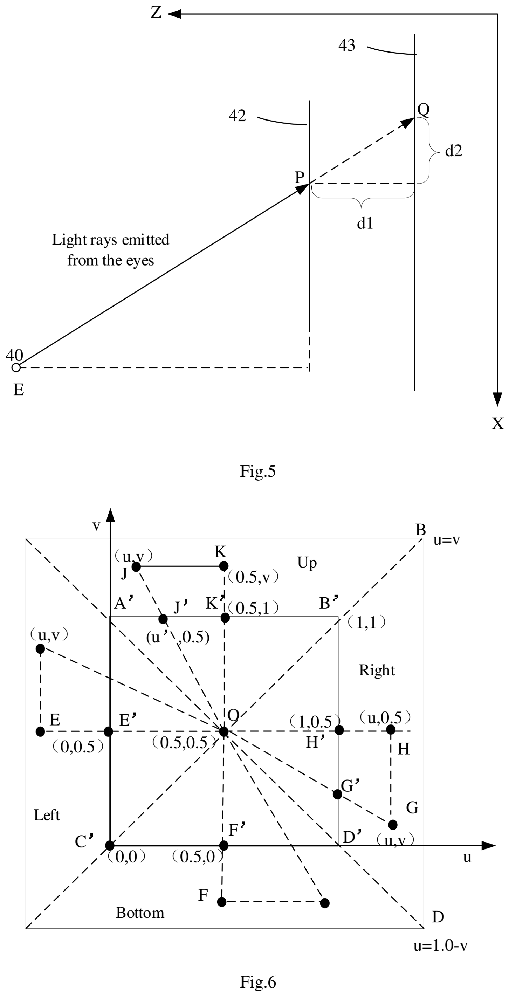

The following is described in conjunction with Fig. 4 and Fig. 5. Fig. 4 is a schematic diagram of a scenario in which a user watches an image through an extended reality device, and Fig. 5 is a schematic diagram of determining a texture according to a pose in the scenario shown in Fig. 4. The pose of the extended reality device (which may be regarded as a human eye) 40 after the pose transformation is shown in Fig. 4. The first display window 41 has a first display area 42 therein, and the first display area 42 is used for displaying one or more frames of 3D video images. The texture layer 43 includes the texture of the video image frame, and the texture may include texture data corresponding to a plurality of pixels, respectively.

The human eye 40 may emit a plurality of light rays, and at least part of the light rays emitted by the human eye 40 fall on the first display area 42. The light rays falling on the first display area 42 may be second rays. Illustratively, the light rays EP and EP' may be second rays. A light intersection method may be used to determine the intersection point of the light rays emitted by the human eye with the first display area 42.

An algorithm for light intersection may be used to determine the coordinates of the intersection point of the light rays emitted by the human eye with the first display area 42.

The parametric equation of the light rays emitted by the human eye is shown in the following formula (1):
$R \left(t\right) = E + tD , t > = 0$ (1);
where t is a scalar value, which may be understood as a semi-infinitely extended straight line. When the value of t is determined, the light ray is determined. D is a direction vector, which is calculated from mesh coordinates with a z value of -1.

The parametric equation of the plane may be defined by three points, and the parametric equation of the plane corresponding to the first display window is represented by the following formula (2):
$X = P 0 + u P 01 + v P 02$ (2);
where P01 and P02 are base vectors, where P01=(1,0,0), P02=(0,1,0); P0 is the origin of the local coordinate system of the first display window, and u and v are scalars.

If the ray intersects with the plane, there is the following relationship represented by the following formula (3):
$E + t D = P 0 + u ⋅ P 01 + v ⋅ P 02$ (3);

In the local coordinate system, the formula (3) is simplified as the following representation:
$E = u ⋅ \left(1, 0, 0\right) + v ⋅ \left(0, 1, 0\right) - tD$ (4);

Therefore, there is the following relationship:
$E . x = u - t ⋅ D . x ;$
$E . y = v - t ⋅ D . y ;$
$E . z = - t ⋅ D . z .$

Where E.x is the coordinate of the point E on the x-axis, E.y is the coordinate of the point E on the y-axis, and E.z is the coordinate of the point E on the z-axis. D.x is the component of the vector D on the x-axis, D.y is the component of the vector D on the y-axis, and D.z is the component of the vector D on the z-axis.

Thus, $t = - E . z / D . z .$

Therefore, the coordinates of the second intersection point of the light ray with the first display area 42 are represented by the following formula (5):
$P = E + \left(-E.z/D.z\right) \times D$ (5).

For each second intersection point P, after obtaining the coordinates of P, since d2 and d1 are known, the coordinates of the intersection point Q of the second ray extended from the second intersection point with the texture layer may be calculated according to the triangle similarity principle. Specifically, according to the triangle similarity principle, there is the following relationship (6):
$\frac{P . x - E . x}{\left|P.z-E.z\right|} = \frac{d 2}{d 1}$ (6);

d2 may be calculated by the above formula (6). P.x is the coordinate of the second intersection point P on the x-axis, and P.z is the coordinate of the second intersection point P on the z-axis.

The expression of the coordinates Q of the intersection point of the second ray extended from the second intersection point with the texture layer is represented by the following formula (7):
$Q . x = P . x + d 2$ (7);
where Q.x is the coordinate of the intersection point on the x-axis.

Similarly, the coordinates of Q.y may be calculated. Q.y is the coordinate of the intersection point on the y-axis.

If the coordinates of the intersection point Q fall within the texture range, the intersection point Q is the first intersection point.

In these examples, the relative positional relationship between the texture layer and the first display window is used to calculate the intersection point of the second ray with the texture layer by using the triangle similarity principle, which simplifies the calculation method for determining the intersection point of the second ray with the texture layer, and improves the efficiency of determining the at least part of texture to be rendered.

In these implementations, the second intersection point of the second ray emitted from the first coordinates with the first display area is determined, and then the intersection point of the second ray with the texture layer is determined. When the intersection point with the texture layer falls within the texture range, the pixel corresponding to the intersection point belongs to the at least part of texture to be rendered. Since the first display area is the area passing through the origin of the local coordinate system, the calculation process of the second intersection point is simplified, the efficiency of determining a plurality of second intersection points may be improved, and the efficiency of determining the at least part of texture to be rendered may be improved.

The first display window may be, for example, a display window in a display apparatus integrated in the extended reality device, or may be a display window of an external display apparatus to which the extended reality device sends display content through a wired or wireless manner for display.

In some optional implementations of the method of image displaying provided by the embodiment shown in Fig. 2, the method further includes the following steps.

First, a scaling factor is determined in response to detecting that the texture of the video image frame is scaled.

The texture may be scaled in different ways, such as by setting texture parameters, scaling a rendering target, etc. For example, the texture is scaled up or down. If the texture is scaled up, the observable texture range will be reduced, and if the texture is scaled down, the observable texture range will be increased.

The execution body may detect whether the texture is scaled, and may determine the scaling factor when detecting that the texture is scaled.

Then, for each first intersection point, the first intersection point is updated according to the coordinates of the first intersection point and the scaling factor to obtain a corresponding updated first intersection point.

In an example, the coordinates of the first intersection point on each coordinate axis may be divided by the scaling factor to obtain the updated first intersection point.

Finally, the at least part of texture to be rendered in the first display window which is updated is determined according to the plurality of updated first intersection points.

In these embodiments, when the texture of the video image frame is scaled, the first intersection point determined by the embodiment shown in Fig. 2 is updated according to the scaling factor, so that the displayed content matches the scaling of the texture.

In the related art, in order to enable a user to browse more comprehensive picture content in a central area of vision, the 3D video image usually does not fill the entire display window, and a background image is filled in the area of the display window where the 3D video image is not filled. The depth of the background image and the depth of the 3D video image may be different. In this way, due to the depth inconsistency between the background image and the 3D video image, the problem of difficulty in image fusion of human eyes is prone to occur due to depth conflict.

In some optional implementations of the embodiment shown in Fig. 2, the first display window further includes a transition region other than the display region of the second picture content; and the method further includes the following steps:

displaying transition picture content in the transition region, where the transition picture content is used for transitioning between the second picture content and image content displayed outside the first display window.

The area other than the area where the second picture content is displayed in the first display window is the transition region. In an example, the display window of the display apparatus associated with the extended reality device includes the first display window and other display windows or other display areas outside the first display window and adjacent to the first display window. A static image or an image of the current scene collected by the extended reality device may be displayed in the other display window or other display areas.

For example, the other display window may be located around the first display window. The depth of the image displayed in the other display window may be different from the depth of the picture content displayed in the first display area. If the first display area directly covers the first display window, there is no transition between the picture content displayed in the first display area and the image displayed in the other display area. Due to the depth conflict of the picture content displayed in the two windows, it is difficult for human eyes to fuse images when observing the content displayed in the entire display apparatus, resulting in a poor viewing experience.

In these implementations, by setting the transition region outside the first display area of the first display window, displaying the transition picture content in the transition region, and using the transition picture content for transitioning between the second picture content and the image displayed in the other display window, the phenomenon of difficulty in image fusion caused by the depth conflict between the second picture content and the image displayed in the other display window is avoided, which helps to improve the user experience.

In some implementations, the transition region includes a static transition region and/or a dynamic transition region. The static transition region is a region other than the first display region in the first display window. The dynamic transition region is composed of a plurality of third intersection points, and the plurality of third intersection points are intersection points of a plurality of third rays and the first display region; where the third rays are rays among the plurality of second rays whose intersection points with the texture layer fall outside the texture of the video image frame; and the plurality of third intersection points belong to a plurality of second intersection points.

The static transition region may be regarded as a region that hardly changes in the first display window. For example, the region between the frame of the first display window 41 and the first display area 42 in Fig. 4 is the static transition region. The dynamic transition region is located in the first display area, and the size of the dynamic transition region will change with the pose of the extended reality device. In some scenarios, the size of the dynamic transition region may be greater than or equal to 0 and smaller than the size of the first display area. The size of the dynamic region or the size of the first display area here may be understood as the number of included pixels.

In some scenarios, due to the limited field of view (Fov) of the video image frame, when the human eye looks at the first display window obliquely from the side, part of the light rays emitted by the human eye fall outside the texture range after passing through the first display area, that is, the texture of the video image frame is not enough to cover the entire first display area. If the corresponding transition picture content is not determined for these third intersection points, the area not covered by the texture may display pure black or other texture wrapping phenomena. The area not covered by the texture in the first display area may be used as the dynamic transition region, and the area 44 surrounded by the dotted line frame as shown in Fig. 4 is the dynamic transition region. If the pose of the extended reality device results in the dynamic transition region, it is necessary to determine the transition picture content displayed in the dynamic transition region. In order to make the content displayed in the entire first display window coherent for the user to browse, the pixel values of the pixels in the transition region may be determined according to the pixel values of the pixels adjacent to the transition display region in the second picture content.

The static transition region is provided in the first display area to ensure that there is the transition picture content between the second picture content and other display content. The dynamic transition region is provided according to whether the second picture content fills the first display area, so that when the second picture content visible in the pose of the extended reality device does not fill up the first display area, the transition picture content is filled in the dynamic transition region, so that the first display area is completely filled with the picture content in different poses of the extended reality device, and the phenomenon of sudden change of the picture content will not be caused.

Specifically, the pixel value of each pixel in the transition picture content is determined based on the following steps.

First, a plurality of fourth rays emitted from an endpoint which is the center point of the first display window to an edge of the first display window are determined.

For example, the fourth rays here are rays extending only in the plane where the first display window is located.

The endpoint of the fourth ray is the center point of the first display window.

Then, for each fourth ray, a target intersection point of the fourth ray with an inner boundary of the transition region is determined; and the pixel value of the target intersection point is taken as the first pixel values of a plurality of first pixels located in the transition region on the fourth ray. For example, the target intersection point is a fourth intersection point.

Finally, down-sampling and filtering are performed on the plurality of first pixels in the transition region to obtain a plurality of pixels in the transition region and respective pixel values.

The following is described in conjunction with Fig. 6. Please refer to Fig. 6, which is a schematic diagram of determining a pixel value of a pixel point in the transition region provided by the present disclosure.

As shown in Fig. 6, O is the center point of the first display window, and a plurality of rays are emitted from the point O, illustratively, such as OA, OB, OC, OD, OE, OF, OG, OH, OJ, OK, etc. It may be understood that there may be countless rays starting from the point O, and only the above are taken as examples for illustration. Illustratively, A', B', C' and D' may be four vertices of the first display area. A, B, C and D may be four vertices of the first display window.

The description is given by taking an example in which the area of the dynamic transition region is 0 and the transition region includes only the static transition region. Taking the pixel value of the point J (the first pixel) as an example, a plane coordinate system uC'v is constructed with the vertex C' of the first display area as the origin, and the coordinates of the points O, A', B', and D' may be obtained. Furthermore, the coordinates of four sides perpendicular to the first display area from the point O may be obtained. Taking the first display area as a square as an example, the coordinates of the point O may be (0.5, 05). The coordinates of A' are (0, 1), the coordinates of B' are (1, 1), and the coordinates of D are (1, 0); the coordinates of the point K' are (05, 1), the coordinates of the point H' are (1, 0.5), the coordinates of the point F' are (05, 0), the coordinates of the point E' are (0, 0.5), and the coordinates of the point J' are (u', 0.5). According to the triangle similarity principle, there is the following formula:
$\frac{u ′ - 0.5}{u - 0.5} = \frac{0.5}{v - 0.5}$ (8);

From the above formula (8), the following formula (9) may be obtained:
$u ′ = 0.5 + 0.5 \times \frac{u - 0.5}{v - 0.5}$ (9);

In this way, the point J' corresponding to the first pixel point J in the transition region in the second picture content may be obtained, and the pixel value of the point J' may be taken as the pixel value of the first pixel point J. The pixel value of each pixel point in the transition region may be determined by the above method.

After the pixel values of each first pixel in the transition region are preliminarily obtained, these pixels need to be post-processed. Specifically, down-sampling may be performed on the first pixel in the transition region, and then the pixel values of the first pixel after down-sampling are filtered to obtain the pixel values of the plurality of pixels in the transition region.

In an example, the above down-sampling may perform down-sampling on the first pixel in the transition region at a ratio of 1/16, and then perform Gaussian filtering to obtain the pixel value of each pixel in the transition region.

In this way, the transition picture content in the transition region is extended from the pixel values of the edge pixels of the second picture content, thereby inheriting the second picture content. In addition, the transition picture content obtained by blurring the original image extended from the second picture content editing may be obtained by performing down-sampling and filtering on the plurality of first pixels in the transition region, which is beneficial to enhancing the atmosphere; in addition, the depth difference between the second picture content and other display content outside the first display window may be reduced, which is beneficial to synthesizing picture content of different depths in human eyes. In some embodiments, the method further includes:
feathering an adjacent region of the transition picture content and the second picture content.

For example, the width of the adjacent region may include N pixels. Here, N may be an integer greater than or equal to 10.

A mask may be set in the adjacent region, and the second picture content and the transition picture content may be mixed in the mask by setting the weight of the pixel values of the second picture content and the weight of the transition picture content. The transition from the second picture content to the transition picture content is realized, which helps to improve the sudden change from the second picture content to the transition picture content.

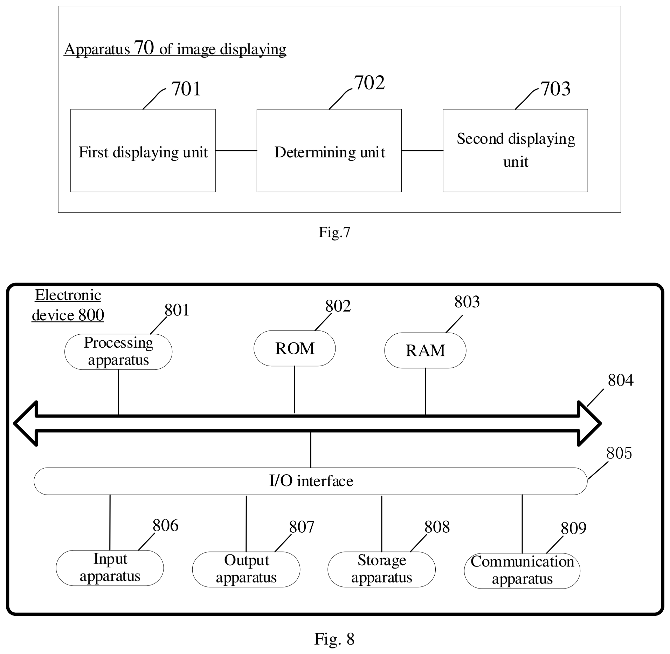

Corresponding to the method of image displaying of the above embodiments, Fig. 7 is a structural block diagram of an apparatus of image displaying provided by an embodiment of the present disclosure. For convenience of explanation, only parts related to the embodiments of the present disclosure are shown. Referring to Fig. 7, the apparatus 70 includes: a first displaying unit 701, a determining unit 702 and a second displaying unit 703.

The first displaying unit 701 is configured to display first picture content of a video image frame in a first display window associated with an extended apparatus;
the determining unit 702 is configured to determine second picture content of the video image frame corresponding to a changed pose in response to a change in a pose of the extended apparatus; and
the second displaying unit 703 is configured to display the second picture content in the first display window, where the first picture content and the second picture content are not completely the same.

In this embodiment, the first displaying unit displays the first picture content of the video image frame in the first display window associated with the extended reality device; the determining unit determines the second picture content of the video image frame corresponding to the changed pose in response to the change in the pose of the extended reality device; and the second displaying unit displays the second picture content in the first display window, where the first picture content and the second picture content are not completely the same. In this way, the picture content of the displayed video image frame is updated with the change of the pose of the extended reality device, which is beneficial to enhancing the immersion and the sense of spatial reality, and the spatial interactivity may also be improved.

In an embodiment of the present disclosure, the determining unit 702 includes a texture determining subunit (not shown in the figure) and a picture content determining subunit (not shown in the figure), where,
the texture determining subunit is configured to determine at least part of texture of the video image frame which is capable of being observed through the first display window according to the changed pose, where the texture of the video image frame is located on a texture layer; and
the picture content determining subunit is configured to determine the second picture content to be rendered according to the at least part of texture.

In summary, furthermore, by disposing the texture layer and the picture content display window on different planes, the purpose that different areas of the texture layer may be observed through the display window from human eyes may be achieved, and then different areas to be rendered of the video image frame may be determined according to different poses of the extended reality device, and a specific solution for displaying different picture content with the change of the pose of the extended reality device is provided, which is beneficial to improving the sense of space and immersion of the displayed content of the extended reality device.

In an embodiment of the present disclosure, the texture determining subunit is further configured to:
determine first coordinates of an observation point in a local coordinate system of the first display window, where the observation point is a mapping point of the extended reality device in the local coordinate system; and
determine a plurality of first rays that intersect with both a first display area in the first display window and the texture of the video image frame, and determine the at least part of texture according to first intersection points of the plurality of first rays with the texture of the video image frame;
where endpoints of the plurality of first rays are the first coordinates.

In summary, furthermore, the first coordinates of the extended reality device are determined in the local coordinate system of the first display window, and then the plurality of first rays starting from the first coordinates and intersecting with both the first display area and the texture of the video image frame are determined, and the at least part of texture to be rendered after the pose of the extended reality device has changed is determined by the intersection points of the plurality of first rays with the texture. In different poses of the extended reality device, the rays emitted from the extended reality device and intersecting with both the first display area and the texture are not completely the same, so the at least part of texture to be rendered which is determined is not completely the same. Thus, the effect of determining different at least part of texture with the change of the pose of the extended reality device is realized.

In an embodiment of the present disclosure, the texture determining subunit is further configured to:
determine second intersection points of a plurality of second rays emitted from the first coordinates with the first display area;
for each second ray, calculate coordinates of an intersection point of the second ray with the texture layer according to the second intersection point corresponding to the second ray; and
in response to determining that the calculated coordinates of the intersection point is within a range of the texture of the video image frame, take the second ray as a first ray, and take the intersection point as a first intersection point; and
compose the at least part of texture of first intersection points corresponding to the plurality of first rays, respectively.

In summary, furthermore, the second intersection point of the second ray emitted from the first coordinates with the first display area is determined, and then the intersection point of the second ray with the texture layer is determined. When the intersection point with the texture layer falls within the texture range, the pixel corresponding to the intersection point belongs to the at least part of texture to be rendered. Since the first display area is the area passing through the origin of the local coordinate system, the calculation process of the second intersection point is simplified, the efficiency of determining a plurality of second intersection points may be improved, and the efficiency of determining the at least part of texture to be rendered may be improved.

In an embodiment of the present disclosure, the texture determining subunit is further configured to:
calculate the coordinates of the intersection point of the second ray with the texture layer according to a relative positional relationship between the texture layer and the first display window, a distance between the extended reality device and the first display window, and the coordinates of the second intersection point.

In summary, furthermore, the relative positional relationship between the texture layer and the first display window is used to calculate the intersection point of the second ray with the texture layer by using the triangle similarity principle, which simplifies the calculation method for determining the intersection point of the second ray with the texture layer, and improves the efficiency of determining the at least part of texture to be rendered.

In an embodiment of the present disclosure, the determining unit 702 is further configured to:
determine a scaling factor in response to detecting that the texture of the video image frame is scaled; and
update, for each first intersection point, the first intersection point according to coordinates of the first intersection point and the scaling factor to obtain a corresponding updated first intersection point; and
determine at least part of texture to be rendered in the first display window which is updated according to a plurality of updated first intersection points.

In summary, furthermore, when the texture of the video image frame is scaled, the determined first intersection point is updated according to the scaling factor, so that the displayed content adapts to the scaling of the texture.

In an embodiment of the present disclosure, the first display window further includes a transition region other than the display region of the second picture content; and the apparatus 70 further includes a third displaying unit (not shown in the figure), which is configured to:
display transition picture content in the transition region, where the transition picture content is used for transitioning between the second picture content and image content displayed outside the first display window.

In summary, furthermore, by setting the transition region outside the first display area of the first display window and displaying the transition picture content in the transition region, and using the transition picture content for transitioning between the second picture content and the image displayed in the other display window, the phenomenon of difficulty in image fusion caused by the depth conflict between the second picture content and the image displayed in the other display window is avoided, which helps to improve the user experience.

In an embodiment of the present disclosure, the transition region includes a static transition region and/or a dynamic transition region, where,
the static transition region is a region other than the first display region in the first display window; and
the dynamic transition region is composed of a plurality of third intersection points, and the plurality of third intersection points are intersection points of a plurality of third rays and the first display region; where the third rays are rays among the plurality of second rays whose intersection points with the texture layer fall outside the texture of the video image frame; and the plurality of third intersection points belong to a plurality of second intersection points.

In summary, furthermore, the static transition region is provided in the first display area to ensure that there is the transition picture content between the second picture content and other display content. The dynamic transition region is provided according to whether the second picture content fills up the first display area, so that when the second picture content visible in the pose of the extended reality device does not fill up the first display area, the transition picture content is filled in the dynamic transition region, so that the first display area is completely filled with the picture content in different poses of the extended reality device, and the phenomenon of sudden change of the picture content will not be caused.

In an embodiment of the present disclosure, the third displaying unit is further configured to:
determine the pixel value of each pixel in the transition picture content based on the following steps:
determine a plurality of fourth rays emitted from an endpoint which is the center point of the first display window to an edge of the first display window;
for each fourth ray, determine a target intersection point of the fourth ray with an inner boundary of the transition region; and take the pixel value of the target intersection point as first pixel values of a plurality of first pixels located in the transition region on the fourth ray; and
perform down-sampling and filtering on the plurality of first pixels in the transition region to obtain a plurality of first pixels in the transition region and respective pixel values.

In summary, furthermore, the transition picture content in the transition region is extended from the pixel values of the edge pixels of the second picture content, thereby inheriting the second picture content. In addition, the transition picture content obtained by blurring the original image extended from the second picture content editing may be obtained by performing down-sampling and filtering on the plurality of first pixels in the transition region, which is beneficial to enhancing the atmosphere; in addition, the depth difference between the second picture content and other display content outside the first display window may be reduced, which is beneficial to synthesizing picture content of different depths in human eyes. In an embodiment of the present disclosure, the third displaying unit is further configured to:
feather an adjacent region of the transition picture content and the second picture content.

In summary, furthermore, the transition from the second picture content to the transition picture content is realized, which helps to improve the sudden change from the second picture content to the transition picture content.

The apparatus provided by this embodiment may be used to implement the technical solutions of the above method embodiments, and the implementation principles and technical effects thereof are similar, which will not be repeated here in this embodiment.

In order to implement the above embodiments, an embodiment of the present disclosure further provides an electronic device.

Referring to Fig. 8, it shows a schematic structural diagram of an electronic device 800 suitable for implementing an embodiment of the present disclosure, and the electronic device 800 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (such as a vehicle-mounted navigation terminal), etc., and fixed terminals such as a digital TV, a desktop computer, etc. The electronic device shown in Fig. 8 is only an example, and should not impose any limitation on the function and scope of use of the embodiments of the present disclosure.

As shown in Fig. 8, the electronic device 800 may include a processing apparatus (such as a central processing unit, a graphics processor and the like) 801, which may perform various appropriate actions and processing according to a program stored in a read-only memory (abbreviated as ROM) 802 or a program loaded into a random access memory (abbreviated as RAM) 803 from a storage apparatus 808. The RAM 803 further stores various programs and data required for operations of the electronic device 800. The processing apparatus 801, the ROM 802 and the RAM 803 are connected to each other through a bus 804. An input/output (I/O) interface 805 is also connected to the bus 804.

Usually, the following apparatuses may be connected to the I/O interface 805: an input apparatus 806 including, for example, a touch screen, a touchpad, a keyboard, a mouse, a camera, a microphone, an accelerometer, a gyroscope and the like; an output apparatus 807 including, for example, a liquid crystal display (Liquid Crystal Display, LCD for short), a loudspeaker, a vibrator and the like; a storage apparatus 808 including, for example, a magnetic tape, a hard disk and the like; and a communication apparatus 809. The communication apparatus 809 may allow the electronic device 800 to perform wireless or wired communication with other devices to exchange data. Although Fig. 8 shows the electronic device 800 having various apparatuses, it should be understood that not all the apparatuses shown here need to be implemented or provided. More or fewer apparatuses may be implemented or provided alternatively.

In particular, according to an embodiment of the present disclosure, the process described above with reference to the flowchart may be implemented as a computer software program. For example, an embodiment of the present disclosure includes a computer program product, which includes a computer program carried on a computer-readable medium, where the computer program contains program codes for performing the method shown in the flowchart. In such an embodiment, the computer program may be downloaded and installed from a network through the communication apparatus 809, or installed from the storage apparatus 808, or installed from the ROM 802. When the computer program is executed by the processing apparatus 801, the above functions defined in the method of the embodiments of the present disclosure are executed.

It should be noted that the above computer-readable medium in the present disclosure may be a computer-readable signal medium or a computer-readable storage medium or any combination of the two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, which may be used by or in combination with an instruction execution system, apparatus or device. In the present disclosure, a computer-readable signal medium may include a data signal propagated in a baseband or as a part of a carrier wave, and computer-readable program codes are carried in the data signal. The data signal propagated in this way may adopt multiple forms, including but not limited to an electromagnetic signal, an optical signal or any suitable combination of the above. The computer-readable signal medium may also be any computer-readable medium other than the computer-readable storage medium, and the computer-readable signal medium may send, propagate or transmit a program used by or in combination with an instruction execution system, apparatus or device. The program codes contained on the computer-readable medium may be transmitted by any suitable medium, including but not limited to: a wire, an optical cable, RF (radio frequency) and the like, or any suitable combination of the above.

The above computer-readable medium may be contained in the above electronic device; or it may exist alone without being assembled into the electronic device.

The above computer-readable medium carries one or more programs, which, when executed by the electronic device, causes the electronic device to perform the method shown in the above embodiments.

The computer program codes for performing the operations of the present disclosure may be written in one or more programming languages or a combination thereof. The above programming languages include object-oriented programming languages such as Java, Smalltalk, C++, and also include conventional procedural programming languages such as "C" language or similar programming languages. The program codes may be executed entirely on a user's computer, partly executed on a user's computer, executed as an independent software package, partly executed on a user's computer and partly executed on a remote computer, or entirely executed on a remote computer or server. In the case of involving a remote computer, the remote computer may be connected to a user's computer through any kind of network, including a local area network (Local Area Network, LAN for short) or a wide area network (Wide Area Network, WAN for short), or it may be connected to an external computer (for example, connected by using Internet provided by an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. Among them, the name of the unit does not constitute a limitation on the unit itself under certain circumstances, for example, the first acquiring unit may also be described as "a unit for acquiring at least two internet protocol addresses".

The functions described herein may be performed at least in part by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logical device (CPLD) and the like.

According to one or more embodiments of the present disclosure, a method of image displaying is provided, which is used for an extended reality device and includes:
displaying first picture content of a video image frame in a first display window associated with the extended reality device;
determining second picture content of the video image frame corresponding to a changed pose in response to a change in a pose of the extended reality device; and
displaying the second picture content in the first display window, where the first picture content and the second picture content are not completely the same.

According to one or more embodiments of the present disclosure, the determining a second picture content of the video image frame corresponding to the changed pose includes:
determining at least part of texture of the video image frame which is capable of being observed through the first display window according to the changed pose, where the texture of the video image frame is located on a texture layer; and
determining the second picture content to be rendered according to the at least part of texture; and
the displaying the second picture content in the first display window includes:
displaying in the first display window the second picture content obtained by rendering the at least part of texture.

According to one or more embodiments of the present disclosure, the determining at least part of texture of the video image frame which is capable of being observed through the first display window according to the changed pose includes:
determining first coordinates of an observation point in a local coordinate system of the first display window, where the observation point is a mapping point of the extended reality device in the local coordinate system; and
determining a plurality of first rays that intersect with both a first display area in the first display window and the texture of the video image frame, and determining the at least part of texture according to first intersection points of the plurality of first rays with the texture of the video image frame;
where endpoints of the plurality of first rays are the first coordinates.

According to one or more embodiments of the present disclosure, the determining a plurality of first rays that intersect with both a first display area in the first display window and the texture of the video image frame, and determining the at least part of texture according to first intersection points of the plurality of first rays and with texture of the video image frame includes:
determining second intersection points of a plurality of second rays emitted from the first coordinates with the first display area;
for each second ray, calculating coordinates of an intersection point of the second ray with the texture layer according to the second intersection point corresponding to the second ray; and
in response to determining that the calculated coordinates of the intersection point is within a range of the texture of the video image frame, taking the second ray as a first ray, and taking the intersection point as a first intersection point; and
composing the at least part of texture of first intersection points corresponding to the plurality of first rays, respectively.

According to one or more embodiments of the present disclosure, the for each second ray, calculating, the coordinates of the intersection point of the second ray with the texture layer according to the coordinates of the second intersection point corresponding to the second ray includes:
calculating the coordinates of the intersection point of the second ray with the texture layer according to a relative positional relationship between the texture layer and the first display window, a distance between the extended reality device and the first display window, and the coordinates of the second intersection point.

According to one or more embodiments of the present disclosure, the method further includes:
determining a scaling factor in response to detecting that the texture of the video image frame is scaled; and
updating, for each first intersection point, the first intersection point according to coordinates of the first intersection point and the scaling factor to obtain a corresponding updated first intersection point; and
determining at least part of texture to be rendered in the first display window which is updated according to a plurality of updated first intersection points.

According to one or more embodiments of the present disclosure, the first display window further includes a transition region other than the display region of the second picture content; and the method further includes:
displaying transition picture content in the transition region, where the transition picture content is used for transitioning between the second picture content and image content displayed outside the first display window.

According to one or more embodiments of the present disclosure, the transition region includes a static transition region and/or a dynamic transition region, where,
the static transition region is a region other than the first display region in the first display window; and
the dynamic transition region is composed of a plurality of third intersection points, and the plurality of third intersection points are intersection points of a plurality of third rays and the first display region; where the third rays are rays among the plurality of second rays whose intersection points with the texture layer fall outside the texture of the video image frame; and the plurality of third intersection points belong to a plurality of second intersection points.

According to one or more embodiments of the present disclosure, a pixel value of each pixel in the transition picture content is determined based on the following steps:
determining a plurality of fourth rays emitted from an endpoint which is the center point of the first display window to an edge of the first display window;
for each fourth ray, determining a target intersection point of the fourth ray with an inner boundary of the transition region; and taking the pixel value of the target intersection point as the first pixel values of a plurality of first pixels located in the transition region on the fourth ray; and
performing down-sampling and filtering on the plurality of first pixels in the transition region to obtain a plurality of first pixels in the transition region and respective pixel values.

According to one or more embodiments of the present disclosure, the method further includes:
feathering an adjacent region of the transition picture content and the second picture content.

According to one or more embodiments of the present disclosure, an apparatus of image displaying is provided, which is used for an extended reality device and includes:
a first displaying unit, configured to display first picture content of a video image frame in a first display window associated with the extended reality device;
a determining unit, configured to determine second picture content of the video image frame corresponding to a changed pose in response to a change in a pose of the extended apparatus; and
a second displaying unit, configured to display the second picture content in the first display window; where the first picture content and the second picture content are not completely the same.

According to one or more embodiments of the present disclosure, the determining unit includes a texture determining subunit and a picture content determining subunit, where,
the texture determining subunit is configured to determine at least part of texture of the video image frame which is capable of being observed through the first display window according to the changed pose, where the texture of the video image frame is located on a texture layer; and
the picture content determining subunit is configured to determine the second picture content to be rendered according to the at least part of texture.

According to one or more embodiments of the present disclosure, the texture determining subunit is further configured to:
determine first coordinates of an observation point in a local coordinate system of the first display window, where the observation point is a mapping point of the extended reality device in the local coordinate system; and
determine a plurality of first rays that intersect with both a first display area in the first display window and the texture of the video image frame, and determine the at least part of texture according to first intersection points of the plurality of first rays with the texture of the video image frame;
where endpoints of the plurality of first rays are the first coordinates.

According to one or more embodiments of the present disclosure, the texture determining subunit is further configured to:
determine second intersection points of a plurality of second rays emitted from the first coordinates with the first display area;
for each second ray, calculate coordinates of an intersection point of the second ray with the texture layer according to the second intersection point corresponding to the second ray; and
in response to determining that the calculated coordinates of the intersection point is within a range of the texture of the video image frame, take the second ray as a first ray, and take the intersection point as a first intersection point; and
compose the at least part of texture of first intersection points corresponding to the plurality of first rays, respectively.

According to one or more embodiments of the present disclosure, the texture determining subunit is further configured to:
calculate the coordinates of the intersection point of the second ray with the texture layer according to a relative positional relationship between the texture layer and the first display window, a distance between the extended reality device and the first display window, and the coordinates of the second intersection point.

According to one or more embodiments of the present disclosure, the determining unit is further configured to:
determine a scaling factor in response to detecting that the texture of the video image frame is scaled; and
updating, for each first intersection point, the first intersection point according to coordinates of the first intersection point and the scaling factor to obtain a corresponding updated first intersection point; and
determining at least part of texture to be rendered in the first display window which is updated according to a plurality of updated first intersection points.

According to one or more embodiments of the present disclosure, the first display window further includes a transition region other than the display region of the second picture content; and the apparatus further includes a third displaying unit, which is configured to:
display transition picture content in the transition region, where the transition picture content is used for transitioning between the second picture content and image content displayed outside the first display window.

According to one or more embodiments of the present disclosure, the transition region includes a static transition region and/or a dynamic transition region, where,
the static transition region is a region other than the first display region in the first display window; and
the dynamic transition region is composed of a plurality of third intersection points, and the plurality of third intersection points are intersection points of a plurality of third rays with the first display region; where the third rays are rays among a plurality of second rays whose intersection points with the texture layer fall outside the texture of the video image frame; the plurality of third intersection points belong to a plurality of second intersection points.

According to one or more embodiments of the present disclosure, the third displaying unit is further configured to:
determine a pixel value of each pixel in the transition picture content based on the following steps:
determine a plurality of fourth rays emitted from an endpoint which is the center point of the first display window to an edge of the first display window;
for each fourth ray, determine a target intersection point of the fourth ray with an inner boundary of the transition region; and take a pixel value of the target intersection point as a first pixel values of a plurality of first pixels located in the transition region on the fourth ray; and
perform down-sampling and filtering on the plurality of first pixels in the transition region to obtain a plurality of first pixels in the transition region and respective pixel values.

According to one or more embodiments of the present disclosure, the third displaying unit is further configured to:
feather an adjacent region of the transition picture content and the second picture content.

According to one or more embodiments of the present disclosure, an electronic device is provided, which includes: at least one processor and a memory;
where the memory stores a computer-executable instruction; and
the at least one processor executes the computer-executable instruction stored in the memory, so that the at least one processor executes the method of image displaying according to the above embodiment and various possible designs of the embodiment.

According to one or more embodiments of the present disclosure, a computer-readable storage medium is provided, where a computer-executable instruction is stored in the computer-readable storage medium, and when the computer-executable instruction is executed by a processor, the method of image displaying according to the above embodiment and various possible designs of the embodiment is implemented.

According to one or more embodiments of the present disclosure, a computer program product is provided, which includes a computer program, and when the computer program is executed by a processor, the method of image displaying according to the above embodiment and various possible designs of the embodiment is implemented.

The above description is only preferred embodiments of the present disclosure and an explanation of the technical principles employed. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosed concept. For example, a technical solution formed by replacing the above features and the technical features disclosed in the present disclosure (but not limited to) with similar functions with each other.

Additionally, although operations are depicted in a particular order, this should not be understood as requiring that such operations are performed in a specific order as illustrated or in a sequential order. Under certain circumstances, multitasking and parallel processing may be advantageous. Likewise, although several specific implementation details are included in the above discussion, these should not be construed as limitations on the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in a language specific to structural features and/or method logical actions, it should be understood that the subject matter defined in the appended claims is not necessarily limited to the specific features or actions described above. Rather, the specific features and actions described above are merely exemplary forms for implementing the claims.

## Claims

1. A method of image displaying, used for an extended reality device, comprising:
displaying (101) first picture content of a video image frame in a first display window associated with the extended reality device;
determining (102) second picture content of the video image frame corresponding to a changed pose in response to a change in a pose of the extended reality device; and
displaying (103) the second picture content in the first display window, wherein the first picture content and the second picture content are not completely the same.

2. The method of claim 1, wherein the determining second picture content of the video image frame corresponding to a changed pose comprises:
determining (202) at least part of texture of the video image frame which is capable of being observed through the first display window according to the changed pose, wherein the texture of the video image frame is located on a texture layer; and
determining (203) the second picture content to be rendered according to the at least part of texture; and
the displaying the second picture content in the first display window comprises:
displaying (204) in the first display window the second picture content obtained by rendering the at least part of texture.

3. The method of claim 2, wherein the determining at least part of texture of the video image frame which is capable of being observed through the first display window according to the changed pose comprises:
determining (301) first coordinates of an observation point in a local coordinate system of the first display window, wherein the observation point is a mapping point of the extended reality device in the local coordinate system; and
determining (302) a plurality of first rays that intersect with both a first display area in the first display window and the texture of the video image frame, and determining the at least part of texture according to first intersection points of the plurality of first rays with the texture of the video image frame;
wherein endpoints of the plurality of first rays are the first coordinates.

4. The method of claim 3, wherein, the determining a plurality of first rays that intersect with both a first display area in the first display window and the texture of the video image frame, and determining the at least part of texture according to first intersection points of the plurality of first rays with the texture of the video image frame comprises:
determining second intersection points (P) of a plurality of second rays emitted from the first coordinates with the first display area;
for each second ray, calculating coordinates of an intersection point of the second ray with the texture layer according to the second intersection point (P) corresponding to the second ray; and
in response to determining that the calculated coordinates of the intersection point is within a range of the texture of the video image frame, taking the second ray as a first ray, and taking the intersection point as a first intersection point; and
composing the at least part of texture of first intersection points respectively corresponding to the plurality of first rays.

5. The method of claim 4, wherein the for each second ray, calculating coordinates of an intersection point of the second ray with the texture layer according to the second intersection point (P) corresponding to the second ray comprises:
calculating coordinates of the intersection point of the second ray with the texture layer according to a relative positional relationship between the texture layer and the first display window, a distance between the extended reality device and the first display window, and the coordinates of the second intersection point (P).

6. The method of claim 3, further comprising:
determining a scaling factor in response to detecting that the texture of the video image frame is scaled; and
updating, for each first intersection point, the first intersection point according to coordinates of the first intersection point and the scaling factor to obtain a corresponding updated first intersection point; and
determining at least part of texture to be rendered in the first display window which is updated according to a plurality of updated first intersection points.

7. The method of any one of claims 3-6, wherein the first display window further comprises a transition region other than the display region of the second picture content; and the method further comprises:
displaying transition picture content in the transition region, wherein the transition picture content is used for transitioning between the second picture content and image content displayed outside the first display window.

8. The method of claim 7, wherein the transition region comprises at least one of a static transition region and a dynamic transition region, wherein,
the static transition region is a region other than the first display region in the first display window; and
the dynamic transition region is composed of a plurality of third intersection points, and the plurality of third intersection points are intersection points of a plurality of third rays with the first display region; wherein the third rays are rays among the plurality of second rays whose intersection points with the texture layer fall outside the texture of the video image frame; and the plurality of third intersection points belong to the plurality of second intersection points.

9. The method of claim 7, wherein a pixel value of each pixel in the transition picture content is determined based on the following steps:
determining a plurality of fourth rays emitted from an endpoint which is the center point of the first display window to an edge of the first display window;
for each fourth ray, determining a fourth intersection point of the fourth ray with an inner boundary of the transition region; and taking the pixel value of the fourth intersection point as first pixel values of a plurality of first pixels located in the transition region on the fourth ray; and
performing down-sampling and filtering on the plurality of first pixels in the transition region to obtain a plurality of first pixels in the transition region and respective pixel values.

10. The method of claim 9, further comprising:
feathering an adjacent region of the transition picture content and the second picture content.

11. An apparatus (70) of image displaying, used for an extended reality device, comprising:
a first displaying unit (701), configured to display first picture content of a video image frame in a first display window associated with the extended reality device;
a determining unit (702), configured to determine second picture content of the video image frame corresponding to a changed pose in response to a change in a pose of the extended apparatus; and
a second displaying unit (703), configured to display the second picture content in the first display window; wherein the first picture content and the second picture content are not completely the same.

12. An electronic device, comprising: at least one processor and at least one memory;
wherein the at least one memory stores a computer-executable instruction; and
the at least one processor executes the computer-executable instruction stored in the memory, so that the processor executes the method of any of claims 1 to 10.

13. A non-transitory computer-readable storage medium, wherein a computer-executable instruction is stored in the computer-readable storage medium, when the computer-executable instruction is executed by a processor, the method of any of claims 1 to 10 is implemented.
